# EUROPÄISCHE PATENTSCHRIFT

(11) **EP 2 244 153 B1**
(45) Veröffentlichungstag und Bekanntmachung des Hinweises auf die Patenterteilung: **11.06.2014**
(21) Anmeldenummer: 10160657.2
(22) Anmeldetag: 22.04.2010
(51) Int. Cl.: G05G 15/08, B60M 1/26

(54) **In einem Zugmittel integrierbare Trenneinrichtung**
Separating device integrated into a pulling device
Dispositif de séparation pouvant être intégré dans un moyen de traction

(30) Priorität: 22.04.2009 DE 102009018190
(43) Veröffentlichungstag der Anmeldung: 27.10.2010
(73) Patentinhaber: Feldmann Beteiligungs GmbH, 42551 Velbert (DE)
(72) Erfinder: Herber, Klaus-Peter, 44791 Bochum (DE); Haensel, Henning, Dr., 44789 Bochum (DE); Scholten, Jan, Prof.Dr., 45277 Essen (DE)
(74) Vertreter: Bals, Rüdiger

(56) Entgegenhaltungen:
- FR-A1- 2 308 579
- GB-A- 626 465
- US-A- 2 397 694
- US-A- 2 964 347
- US-A- 2 996 781
- US-A- 3 044 813
- US-A- 3 077 114
- US-A- 3 125 790
- US-A- 3 205 716
- US-A- 3 413 692
- US-A- 4 733 625
- US-A1- 2003 024 458

## Beschreibung

Die vorliegende Erfindung betrifft eine Trenneinrichtung zur Unterbrechung einer Zugkraft in einem Zugmittel gemäß des Oberbegriffes von Anspruch 1 mit einem ersten Anschlusselement und einem zweiten Anschlusselement, wobei die Trenneinrichtung über die Anschlusselemente in den Kraftfluss des Zugmittels integrierbar ist.

Diverse Trenneinrichtungen zur Unterbrechung einer Zugkraft in einem Zugmittel sind beispielsweise aus den Druckschriften FR 2 308 579 A1, US 2,964,347, GB 626,465 sowie US 2,397,694 A bekannt. Hierbei kommen unterschiedliche, mechanische Ausgestaltungen zum Einsatz, die in der Regel ein Auslösen der Trennvorrichtung mittels eines Hebels oder Haken realisieren.

Aus der DE 26 50 095 A1 ist eine Trenneinrichtung zur Unterbrechung einer Kraft bekannt, die ein erstes Anschlusselement und ein zweites Anschlusselement umfasst. Über die Anschlusselemente erfolgt der Kraftfluss durch die Trenneinrichtung, wobei Sperrkörper vorgesehen sind, die in Gestalt von Kugelelemente ausgeführt sind und in einer Nut sitzen. Die Kugelelemente werden durch einen Druckring in der Nut gehalten, wobei der Druckring mittels einer Federkraft beaufschlagt ist. Die Wirkverbindung zwischen den Kugelelementen und dem Druckring erfolgt über eine kegelförmige Schräge. Wird die Kraft zwischen den Anschlusselementen zu groß, so werden die Kugelelemente radial nach außen gedrückt und somit wird der Druckring axial verschoben und die Kugelelemente können aus der Nut heraus gelangen. Die Trenneinrichtung zur Unterbrechung der Kraft wirkt sowohl bei einer Zugkraft als auch bei einer Druckkraft, wenn eine jeweilige Grenze einer maximal zulässigen Kraft überschritten wird.

Abhängig vom Einsatz der Trenneinrichtung kann der beschriebene Funktionsumfang nicht hinreichend sein. Zwar können durch Trenneinrichtungen Überlastkupplungen zwischen zwei Anschlusselementen gebildet werden, um bei Überschreiten einer Maximalkraft die Schädigung mechanischer Elemente zu vermeiden, jedoch können Trenneinrichtungen erforderlich sein, die einen erweiterten Funktionsumfang besitzen.

Es ist daher die Aufgabe der vorliegenden Erfindung, eine Trenneinrichtung zur Unterbrechung einer Zugkraft in einem Zugmittel zu schaffen, die einen erweiterten Funktionsumfang mit einer erhöhten Sicherheit aufweist.

Diese Aufgabe wird ausgehend von einer Trenneinrichtung gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass zwischen dem ersten Anschlusselement und dem zweiten Anschlusselement Mittel vorgesehen sind, die derart ausgebildet sind, dass die Anschlusselemente bei Unterschreiten einer Mindestzugkraft im Zugmittel mechanisch voneinander getrennt werden.

Die Erfindung geht dabei von dem Gedanken aus, eine Trenneinrichtung zu schaffen, die nicht bei Überschreiten einer Maximalkraft eine Unterbrechung auslöst, sondern die Unterbrechung der Zugkraft wird bei Unterschreiten einer Mindestzugkraft ausgelöst. Solange die Mindestzugkraft erreicht oder überschritten ist, bleiben die Anschlusselemente mechanisch miteinander gekoppelt. Der Kraftfluss kann durch die Trenneinrichtung erfolgen, der auch bei weiterem Anstieg keine Trennung der Anschlusselemente voneinander bewirkt. Unterschreitet jedoch die Zugkraft wenigstens kurzzeitig die vorgegebene Mindestzugkraft, so folgt eine mechanische Trennung des ersten Anschlusselementes vom zweiten Anschlusselement.

Eine derartige Trenneinrichtung kann insbesondere für Nachspanneinrichtungen bei Oberleitungen dienen, wie diese für Oberleitungen von Schienenfahrzeugen bekannt sind. Sowohl das Tragseil als auch der Fahrdraht eines Kettenwerkes wird über Nachspanneinrichtungen gespannt, wobei die Aufbringung der Vorspannung z.B. über Gewichte erfolgt, wobei auch Federanordnungen zur Aufbringung der Vorspannung bekannt sind. Die Gewichte sind an einem Seil aufgehängt, wobei die Zugkraft über ein an einem Mast angebrachtes Spannrad in Richtung zum Tragseil oder zum Fahrdraht verstärkt wird. Reißt das Tragseil oder der Fahrdraht, sinkt die Spannkraft. Zwar besitzen die Spannräder umfangsseitige Zahnkränze, die bei Verlust der Vorspannkraft durch Sperrklinken blockiert werden, so dass ein weiteres Nachlaufen des Seils in Richtung zum Gewicht vermieden wird. Durch elastische Effekte im zuvor gespannten Tragseil oder Fahrdraht können Rückstellkräfte resultieren, welche zu einem Ausklinken der Zahnkränze des Spannrades führen können. Damit ist ein weiteres Einholen des gerissenen Tragseils oder Fahrdraht verbunden. Insbesondere verlagern sich zwischen den Tragseilen und den Fahrdrähten verlaufende so genannte Hänger, die aus ihrem vertikalen Verlauf zur Seite gezogen werden. Dabei können die Verbindungselemente zwischen den Hängern und dem Fahrdraht Schaden nehmen.

Dieser Effekt kann durch den Einsatz von elastischen Elementen zum Spannen des Kettenwerkes, wie zum Beispiel Federn, verstärkt werden. Diese können dazu mit einem Anschlagmittel an einem Mast gelenkig angebracht und mit einem weiteren, an der gegenüberliegenden Seite des elastischen Elementes befestigten Gegenelement mit dem zu spannenden Tragseil oder Fahrdraht verbunden sein. Wenn die Nachspannvorrichtung über keine Mittel zur Sperrung der beweglichen Teile bei einem Riss verfügt, stellt sich nach einem Riss zwangsläufig eine Verzerrung des Kettenwerkes ein, welche mit Hilfe der hier beschriebenen Erfindung vermieden werden kann.

Durch Verwendung der erfindungsgemäßen Trenneinrichtung im Spannseil der Nachspanneinrichtung wird bei einem Bruch des Tragseiles oder des Fahrdrahtes die Zugkraft im Spannseil wenigstens kurzzeitig unterschritten. Unterschreitet die Zugkraft eine in der Trenneinrichtung voreinstellbare Mindestzugkraft, so werden die Anschlusselemente mechanisch voneinander getrennt, was zu einem Durchtrennen des Zugseils der Nachspanneinrichtung führt. Damit wird der Vorteil erreicht, dass das Kettenwerk nicht weiter beschädigt wird, da bei einem Bruch die Nachspanneinrichtung keine Kraft vom abgetrennten Teil des Tragseils aus übertragen kann und nur eine geringe axiale Verlagerung der Position des Tragseils relativ zum Fahrdraht mehr erfolgen kann.

Erfindungsgemäß sind die Mittel als wenigstens ein Sperrkörper ausgebildet, wobei die Sperrkörper im Kraftfluss zwischen den Anschlusselementen angeordnet sind. Der Sperrkörper kann beispielsweise als Kugelelement oder als Klemmring ausgebildet werden. Insbesondere können mehrere auch hintereinander geschaltete Kugelelemente vorgesehen sein, die auf jeweils gleiche Weise im Kraftfluss zwischen den Anschlusselementen angeordnet sind. Sind Kugelelemente in mehreren Ebenen hintereinander geschaltet, kann eine höhere Gesamtkraft übertragen Werden.

Ferner besitzt die erfindungsgemäße Trenneinrichtung ein Gehäuse, wobei die Anschlusselemente als Zugstangen ausgeführt sein können, die sich wenigstens abschnittsweise in das Gehäuse hinein erstrecken. Die Zugstangen können einen runden Querschnitt besitzen, wobei die Verbindung zwischen den Zugstangen und dem Zugmittel über den jeweiligen Abschnitt der Zugstangen erfolgt, der sich aus dem Gehäuse der Trenneinrichtung heraus erstreckt. Hingegen findet die Wirkverbindung zwischen den Zugstangen durch bzw. innerhalb des Gehäuses durch die Sperrkörper statt.

Nach einer bevorzugten Ausgestaltung des Gehäuses ist dieses zylinderförmig ausgeführt und besitzt endseitige Verschlusselemente, wobei die Zugstangen durch Öffnungen in den Verschlusselementen in das Gehäuse hineingeführt sind und sich entlang einer gemeinsamen Längsachse erstrecken. Die Verschlusselemente bilden die endseitigen Planflächen des zylinderförmigen Gehäuses, so dass dieses einem Rohrabschnitt entspricht. Das Gehäuse kann einen ersten Gehäuseteil und einen zweiten Gehäuseteil besitzen, die jeweils Rohrabschnitte bilden und miteinander verschraubt werden können.

Jeweils endseitig werden die Verschlusselemente auf die Gehäuseteile aufgesetzt und entweder direkt über ein Gewinde mit diesen verschraubt oder mittels einzelnen Schraubenelementen am Endabschnitt der Gehäuseteile angebracht.

Im Gehäuse der Trenneinrichtung kann eine Federanordnung aufgenommen sein, wobei der sich in das Gehäuse hinein erstreckende Teil der ersten Zugstange mit der Federanordnung derart wirkverbunden ist, dass die erste Zugstange unter gleichzeitiger Speicherung potentieller Energie in der Federanordnung aus dem Gehäuse herausziehbar ist. Der Weg, über den die erste Zugstange aus dem Gehäuse herausziehbar ist, kann relativ klein ausfallen, wenn eine Federanordnung mit einer entsprechend großen Federkonstante gewählt wird. Durch das Herausziehen der ersten Zugstange aus dem Gehäuse wird die Mindestzugkraft erreicht, wobei bei Erreichen der Mindestzugkraft eine mit der ersten Zugstange bewegte Komponente gegen einen Anschlag gelangen kann, um eine weitere Komprimierung der Federanordnung zu vermeiden. Mit Erreichen der Mindestzugkraft, also der Kraft, ab der die Trenneinrichtung die Zugmittel nicht mehr trennt, herrscht folglich eine in der Federanordnung der Trenneinheit vordefinierte Zugkraft vor, die mit der Federkonstante der Federanordnung oder auch mit der geometrischen Ausbildung des Anschlags einstellbar ist.

Eine weitere Krafterhöhung kann somit ohne Speicherung weiterer potentieller Energie in der Federanordnung erfolgen, so dass die maximale Zugkraft lediglich durch die mechanische Belastbarkeit der Trenneinrichtung begrenzt ist. Wird die erste Zugstange aus dem Gehäuse herausgezogen, durchläuft die Federanordnung einen Kompressionsweg, um bei Erreichen der Mindestzugkraft in einer Sperrstellung zu verbleiben. In dieser Sperrstellung der ersten Zugstange ist die gegenüberliegende, zweite Zugstange durch den oder die Sperrkörper blockiert, und die Trenneinrichtung hält die Zugstangen zusammen und die Kraft kann wenigstens in Höhe der Mindestzugkraft übertragen werden.

Um die gewünschte Sperrwirkung zu erreichen, kann eine Sperrhülse vorgesehen sein, in die sich die zweite Zugstange hinein erstreckt, wobei die Sperrhülse mit der Bewegung der ersten Zugstange mitbewegbar angeordnet ist und wobei der wenigstens eine Sperrkörper in der Sperrstellung der ersten Zugstange zwischen der Sperrhülse und der zweiten Zugstange klemmend und kraftübertragend angeordnet ist. Sind mehrere Sperrkörper beispielsweise in Gestalt von Kugelelementen vorgesehen, so können sich diese gleich verteilt auf dem Umfang der zweiten Zugstange befinden. Da sich die zweite Zugstange in die Sperrhülse hinein erstreckt, kann die Klemmwirkung durch die Sperrkörper in jeweils radialer Richtung zwischen der zweiten Zugstange und der Sperrhülse erfolgen. Auch ist es denkbar, mehrere Klemmelemente hintereinander auf dem Umfang der zweiten Zugstange anzuordnen, wodurch insgesamt hohe Zugkräfte übertragen werden können. Die zuvor beschriebene Klemmwirkung kann durch einen Formschluss und/oder einen Kraftschluss zwischen dem Sperrkörper und der zweiten Zugstange erzeugt werden.

Wird die Mindestzugkraft über die Zugstangen wieder unterschritten, so löst sich die mit der ersten Zugstange bewegte Komponente von ihrem Anschlag, und die komprimierte Federanordnung kann sich wieder entspannen. Die Sperrhülse wird mit der ersten Zugstange axial verschoben, sodass die Sperrhülse auch eine örtliche Verlagerung der Sperrkörper auf der zweiten Zugstange ermöglicht. Hierbei erfolgt eine mechanische Trennung des oder der Sperrkörper von der zweiten Zugstange derart, dass diese nun frei längsverschiebbar im Gehäuse angeordnet ist. Bei einer weiteren Zugkraft im Zugmittel wird die zweite Zugstange aus dem Gehäuse herausgezogen und die gewünschte Trennung ist erfolgt.

Bei der axialen Verschiebung der ersten Zugstange wandert diese in das Gehäuse hinein, so dass die durch den Anschlag gebildete Sperrstellung verlassen wird und eine Freigabestellung angefahren wird. In der so gebildeten Freigabestellung wird der zumindest eine Sperrkörper aus der klemmenden und kraftübertragenden Anordnung derart gelöst, dass die zweite Zugstange freigegeben wird. Nach Freigabe der zweiten Zugstange gelangt diese aus dem Gehäuse der Trenneinrichtung heraus, so dass eine mechanische Trennung der beiden Zugstangen erfolgt ist. Die Trenneinrichtung mit dem Gehäuse verbleibt in fester Anordnung an der ersten Zugstange, so dass die Trennung lediglich zwischen dem Gehäuse der Trenneinrichtung und der zweiten Zugstange stattfindet.

Um die klemmende und kraftübertragende Anordnung des wenigstens einen Sperrkörpers zu erreichen, ist in der zweiten Zugstange eine umlaufende Nut vorgesehen, in die die Sperrkörper wenigstens teilweise eingesetzt werden. Die umlaufende Nut bewirkt einen Hinterschnitt in der Zugstange, so dass eine Schulter gebildet wird, über die der oder die Sperrkörper die zweite Zugstange in einer klemmenden Position im Gehäuse der Trenneinrichtung fixieren. Wird die Sperrhülse durch den Übergang der zweiten Zugstange von der Sperrstellung in die Freigabestellung überführt, so können die Sperrkörper eine radiale, nach außen gerichtete Bewegung ausführen und aus der umlaufenden Nut herausspringen. Die Folge ist ein Lösen der zweiten Zugstange aus der Trenneinrichtung. Die Nut kann alternativ auch in Gestalt einzelner Bohrungen auf dem Umfang der zweiten Zugstange ausgeführt sein, in die die Sperrkörper in Form von Kugelelementen eingesetzt sind. Selbstverständlich kann die zweite Zugstange auch eine Erweiterung, beispielsweise in Gestalt eines ringförmigen Bundes aufweisen, gegen den die Sperrkörper in ihrer klemmenden Position zur Anlage gelangen, sodass die Sperrwirkung auch mit einer so gebildeten kinematischen Umkehr erzielt werden kann.

Sind die Sperrkörper als Kugelelemente ausgeführt, ist eine Kugelhülse vorgesehen, durch die sich die zweite Zugstange hindurch erstreckt und die die Kugelelemente umschließt, wobei die Kugelhülse in der Sperrstellung umfangsseitig von der Sperrhülse umschlossen ist. In der Sperrstellung befinden sich die Kugelelemente in einer sperrenden Anordnung, indem diese teilweise in die Nut in der zweiten Zugstange hinein ragen und durch die Kugelhülse gehalten werden. Die Kugelelemente können nicht radial nach außen entweichen, da die Sperrhülse die Kugelelemente in der Nut außenseitig umschließt.

Um die Kugelelemente durch die Kugelhülse aufzunehmen, besitzt diese mehrere umfangseitig angeordnete und radial nach innen verlaufende Bohrungen, in die die Kugelelemente eingesetzt werden können. Sitzen die Kugelelemente in der Nut der zweiten Zugstange, und sind die Kugelelemente durch die Sperrhülse in der Nut fixiert, so kann die über die zweite Zugstange in die Kugelelemente eingebrachte Zugkraft über die Kugelhülse an das Gehäuse der Trenneinrichtung übertragen werden. Die Kugelhülse kann dafür mit dem endseitig im Gehäuse vorhandenen Verbindungselement verbunden sein.

Die eine Axialkraft übertragende Verbindung zwischen der zweiten Zugstange und der Kugelhülse erfolgt über die Kugelelemente, die erst dann gelöst wird, wenn die Sperrhülse die Freigabestellung einnimmt. Hierfür ist vorgesehen, dass die Sperrhülse einen ersten Bereich mit einem großen Innenradius und einen zweiten Bereich mit einem kleinen Innenradius aufweist. Wenn die Sperrhülse in der Sperrstellung angeordnet ist, hält diese die Sperrkörper über dem zweiten Bereich mit dem kleinen Innenradius in der Kugelhülse fest. In der Freigabestellung gibt die Sperrhülse die Sperrkörper frei, da diese mit dem ersten Bereich mit großem Innenradius der Sperrhülse in Überdeckung gebracht werden und radial nach außen ausweichen können. Dabei gelangen die Kugelelemente aus der Nut heraus und die Freigabe der zweiten Zugstange aus dem Gehäuse heraus ist gewährleistet.

Ist der Sperrkörper als Klemmring ausgeführt, ist keine Kugelhülse vorhanden, sondern eine Anschlaghülse, die mit dem Verbindungselement verbunden sein kann und durch die die zweite Zugstange hindurch geführt ist. Der Klemmring wird durch den zweiten Bereich mit dem kleinen Innenradius der Sperrhülse in der Nut der zweiten Zugstange gehalten. Der Klemmring kann derart federnd ausgeführt sein, dass bei Freigabe des Klemmrings durch die Sperrhülse ein Herausfedern des Klemmrings aus der Nut erfolgt. Im Ergebnis wird die zweite Zugstange auf gleiche Weise freigegeben und kann aus dem Gehäuse der Trenneinrichtung gelöst werden.

Um ein tatsächliches Herausführen der zweiten Zugstange aus dem Gehäuse sicherzustellen, kann eine Hilfsfeder vorgesehen sein, die auf die zweite Zugstange wirkt, derart, dass die zweite Zugstange durch die Hilfsfeder aus dem Gehäuse herausgedrückt wird, wenn diese aus der sperrenden Anordnung der Sperrkörper freigegeben wird.

Alternativ zur vorstehend beschriebenen Anordnung der Kugelhülse, die mit dem zweiten Gehäuseteil unbeweglich verbunden ist, kann gemäß einer alternativen Anordnung auch die Sperrhülse mit dem Gehäuse unbeweglich verbunden sein, wobei die Federanordnung mit der Kugelhülse zusammenwirkt. Hierfür ist die erste Zugstange fest mit dem Gehäuse verbunden. Wirkt die Federanordnung auf die Kugelhülse, indem die Kugelhülse in Richtung zur ersten Zugstange federvorgespannt wird, so kann sich die Kugelhülse bei Unterschreiten einer Mindestvorspannkraft innerhalb der gehäusefest angeordneten Sperrhülse in Richtung zur ersten Zugstange wenigstens so lange bewegen, bis die Sperrkörper mit dem ersten Bereich des großen Innenradius der Sperrhülse in Überdeckung gelangen und dadurch auf gleiche Weise frei gegeben werden können.

Die erfindungsgemäße Trenneinrichtung kann insbesondere zur Trennung eines Zugmittels verwendet werden, das als Seil einer Nachspanneinrichtung zum Spannen eines Tragseils und/oder zum Spannen eines Fahrdrahtes eines Kettenwerkes für ein Schienenfahrzeug ausgebildet ist. Reißt das Tragseil oder der Fahrdraht des Kettenwerkes, können Folgeschäden vermieden werden, indem der verbleibende Teil des Tragseiles oder des Fahrdrahtes nicht weiter durch die Spanngewichte unter Spannung gehalten wird. Durch ein schlagartiges Absenken der Zugkraft im Seil wird die Mindestzugkraft der Trenneinrichtung unterschritten, und die Sperrkörper geben die zweite Zugstange frei. Folglich sinkt die Zugkraft nach Unterschreiten der Mindestzugkraft auf Null ab, und es entsteht keine axiale Verlagerung des Tragseiles relativ zum Fahrdraht. Dabei bleiben insbesondere die senkrecht zwischen dem Tragseil und dem Fahrdraht verlaufenden Hänger unbeschädigt.

Von besonderem Vorteil ist eine elektrisch leitende Trenneinrichtung innerhalb des Kettenwerkes für ein Schienenfahrzeug, um elektrischen Strom durch das Seil leiten zu können. Insbesondre dann, wenn sämtliche die Mittel zur Sperrung der Anschlusselemente bildenden Körper aus einem leitenden Material hergestellt sind, kann ein Strom zwischen den Anschlusselementen fließen.

Abhängig vom Anwendungsfall kann jedoch auch eine elektrisch isolierende Wirkung der Trenneinrichtung vorteilhaft sein, wenn diese beispielsweise die Verbindung einer Nachspanneinrichtung und dem Fahrdraht des Schienenfahrzeugs bildet. Dabei nimmt die Trenneinrichtung zusätzlich die Funktion eines Isolators im Kettenwerk und/oder in der Nachspanneinrichtung für das Kettenwerk ein. Beispielsweise kann wenigstens eine der Zugstangen aus einem Keramikmaterial hergestellt sein und eine gewisse Länge aufweisen, um einen elektrischen Durchschlag innerhalb des isolierenden Anschlusselementes zu vermeiden.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1a: eine schematische Ansicht der Anordnung der erfindungsgemäßen Trenneinrichtung innerhalb einer Nachspanneinrichtung eines Kettenwerkes für ein Schienenfahrzeug in einer montierten, kraftübertragenden Anordnung,
- Figur 1b: die Trenneinrichtung gemäß Figur 1a in einer getrennten Anordnung mit einer unterbrochenen Kraftübertragung,
- Figur 2: eine perspektivische Querschnittsansicht eines ersten Ausführungsbeispiels der Trenneinrichtung und
- Figur 3: ein weiteres Ausführungsbeispiel einer erfindungsgemäßen Trenneinrichtung.

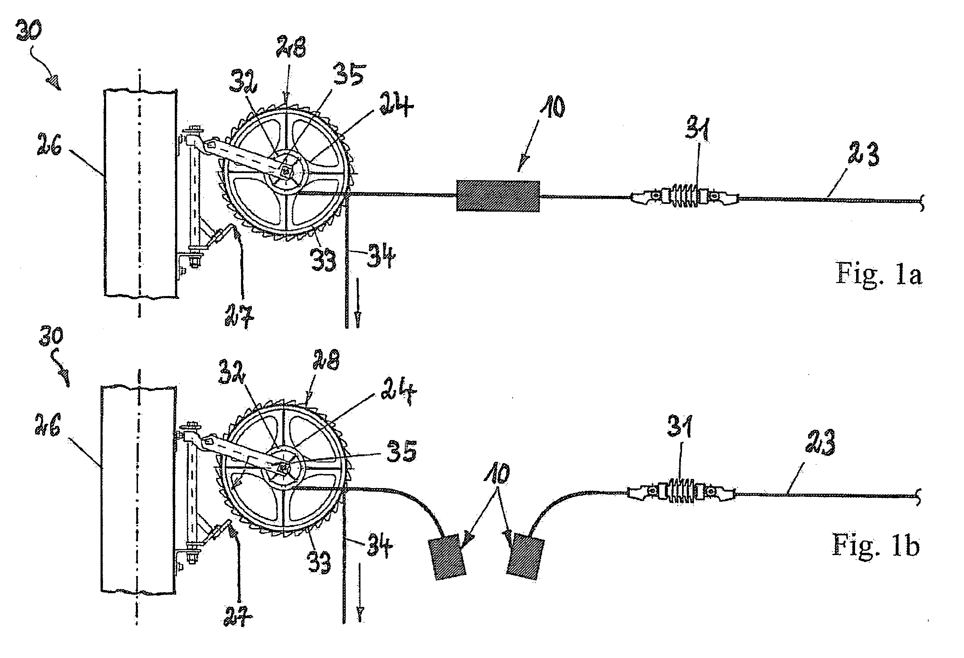

Die Figuren 1a und 1b zeigen eine Nachspanneinrichtung 30, wie diese beispielsweise zum Spannen eines Fahrdrahtes für ein Schienenfahrzeug Verwendung findet. Die erzeugte Zugkraft wird als mechanische Spannung über ein Seil 23 auf den Fahrdraht übertragen, so dass ein Isolator 31 notwendig ist, der kraftübertragend im Seil 23 angeordnet ist. Die Anordnung der erfindungsgemäßen Trenneinrichtung 10 erfolgt auf gleiche Weise, wie diese bereits aus der Anordnung eines Isolators 31 bekannt ist. Das Seil 23 wird über ein Spannrad 24 gespannt, indem dieses auf eine Rolle 32 kleinen Durchmessers aufgewickelt wird. Das Spannrad 24 besitzt eine drehbeweglich mit der kleinen Rolle 32 verbundene Rolle 33 mit großem Durchmesser, auf der ein weiteres Seil 34 aufgenommen ist. Aufgrund der Durchmesserdifferenz zwischen der kleinen Rolle 32 und der großen Rolle 33 entsteht eine Verstärkung der Kraft im Seil 34 auf das Seil 23 zum Spannen des Fahrdrahtes und oder des Fragseils. Der Faktor der Kraftverstärkung entspricht dabei dem Verhältnis des Durchmessers der großen Rolle 33 bezogen auf den Durchmesser der kleinen Rolle 32. Die Zugkraft wird in das Seil 34 durch - nicht näher gezeigte - Gewichte oder Federanordnungen erzeugt, die frei hängend oder durch eine Kulisse geführt am Seil 34 angeordnet werden können.

Das Spannrad 24 wird über einen Mast 26 gehalten, wobei eine Aufnahmevorrichtung des Spannrades 24 eine Wippe 35 umfasst, die das Spannrad 24 drehbar aufnimmt und die gelenkig am Mast 26 angebracht ist. Die Wippe 35 erstreckt sich in Richtung der Resultierenden zwischen der Kraft im Seil 23 in Richtung des Fahrdrahtes und der Kraft im Seil 34 in Richtung der Gewichte. Die Aufnahmevorrichtung umfasst ferner eine Sperrklinke 27, die in einem Zahnkranz 28 eingreifen kann, wenn die Wippe 35 zumindest über einen kleinen Drehbereich im Uhrzeigersinn rotiert. Im Ergebnis wird das Spannrad 24 dann durch die Sperrklinke 27 blockiert, wenn das Seil 23 reißt. Damit wird ein vollständiges Herunterfallen der Gewichte am Seil 34 vermieden. Reißt das Seil 23 an einer von der Nachspanneinrichtung 30 weiter entfernten Stelle, so kann eine durch verschiedene Effekte, zum Beispiel Elastizitäten des Tragseil oder des Fahrdrahtes, hervorgerufene Spannung im Seil 23 ohne die Anordnung einer Trenneinrichtung 10 dazu führen, dass die Sperrklinke 27 den Zahnkranz 28 nicht blockiert.

Um diesem Problem zu entgegnen, löst die erfindungsgemäße Trenneinrichtung 10 gemäß der Darstellung in Figur 1b die Verbindung des Seiles 23 zum Spannrad 24. Das Lösen der Trenneinrichtung 10 erfolgt bei einem zumindest kurzzeitigen Unterschreiten der Mindestzugkraft im Seil 23. Ist die Trennung innerhalb der Trenneinrichtung 10 gemäß der Darstellung in Figur 1b erfolgt, verdreht sich die Wippe 35 derart im Uhrzeigersinn, bis der Zahnkranz 28 in der Sperrklinke 27 verrastet. Durch die Trennung wird folglich keine weitere Kraft auf das Seil 23 übertragen.

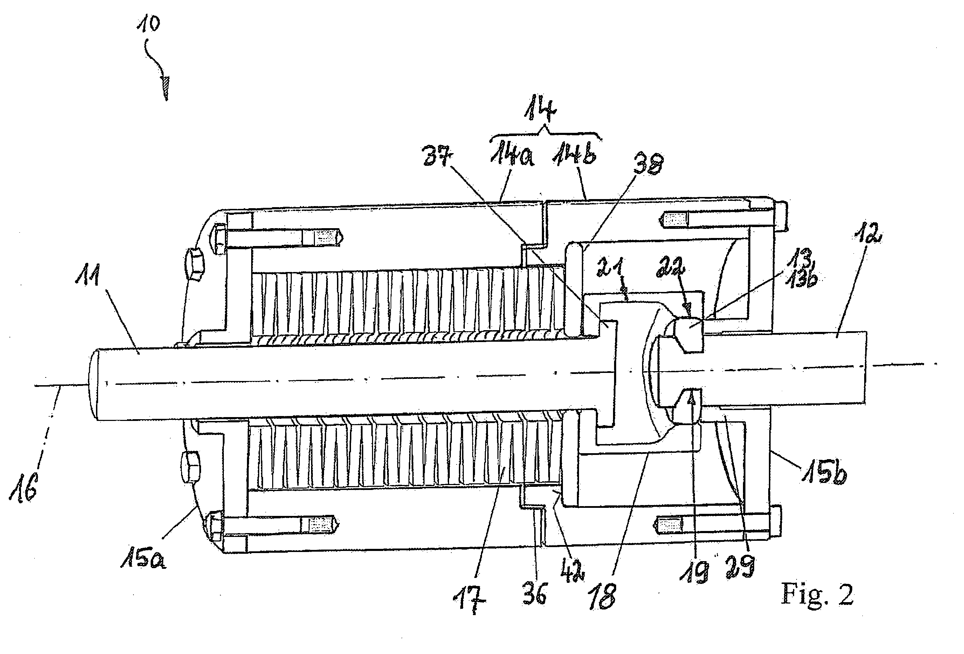

In Figur 2 ist ein erstes Ausführungsbeispiel einer erfindungsgemäßen Trenneinrichtung 10 im Querschnitt perspektivisch dargestellt. Die Trenneinrichtung besitzt ein erstes Anschlusselement 11 und ein zweites Anschlusselement 12, über die die Trenneinrichtung 10 kraftübertragend in einem Zugmittel wie einem Seil, eine Stange, einem Zugband, einer Kette oder dergleichen eingebracht werden kann. Die Anschlusselemente 11 und 12 sind als Zugstangen 11 und 12 mit einem kreisrunden Querschnitt ausgeführt, und erstrecken sich wenigstens teilweise in ein Gehäuse 14 hinein, das den Grundkörper der Trenneinrichtung 10 bildet. Das Gehäuse 14 umfasst einen ersten Gehäuseteil 14a und einen zweiten Gehäuseteil 14b, wobei die Gehäuseteile 14a und 14b über eine Schraubverbindung 36 miteinander verschraubt sind. Die Gehäuseteile 14a und 14b sind rohrartig ausgeführt und endseitig mit Verschlusselementen 15a und 15b verschlossen. Das so gebildete Gehäuse 14 erstreckt sich entlang einer Längsachse 16, wobei die Rotationsachsen der ersten Zugstange 11 und der zweiten Zugstange 12 mit der Längsachse 16 zusammen fallen, wobei das Gehäuse vorzugsweise zylinderförmig ausgeführt ist, eine rechteckige, elliptische oder sonstige Gehäuseform ist jedoch ebenso möglich. Folglich bildet die Längsachse 16 die Richtung der Zugkraft, die durch die Trenneinrichtung 10 übertragen wird.

Die erste Zugstange 11 erstreckt sich in das Gehäuse 14 zumindest teilweise hinein und besitzt ein tellerförmiges Ende 37 innerhalb des Gehäuses 14. Zwischen dem tellerförmigen Ende 37 und dem Verschlusselement 15a ist eine Federanordnung 17 eingebracht, die aus einem Stapel Tellerfedern gebildet ist und somit als Druckfeder wirkt. Wird die erste Zugstange 11 aus dem Gehäuse 14 herausgezogen, so komprimiert die Federanordnung 17, bis ein zwischen dem tellerförmigen Ende 37 und der Federanordnung 17 angeordneter Anschlagteller 38 an einer innenseitigen Anschlagkante 42 innerhalb des zweiten Gehäuseteils 14b zur Anlage gelangt. Bei Anlage des Anschlagtellers 38 an der Anschlagkante 42 des zweiten Gehäuseteils 14 wird die Mindestzugkraft in den Zugstangen 11 und 12 erreicht, die durch Kompression der Federanordnung 17 vorgegeben ist. Durch den Anschlag des Anschlagtellers 38 erfolgt bei weiterer Erhöhung der Zugkraft in den Zugstangen 11 und 12 keine weitere Kompression der Federanordnung 17.

In Abhängigkeit der Einschraubtiefe der Schraubverbindung 36 kann die Länge des Gehäuses 14 verändert werden, indem der erste Gehäuseteil 14a gegen das zweite Gehäuseteil 14b verdreht wird. Werden die beiden Gehäuseteile 14a und 14b teilweise auseinandergedreht, so verändert sich der Kompressionsweg der Federanordnung 17, bis der Anschlagteller 38 innenseitig an den zweiten Gehäuseteil 14b anschlägt. Damit ist die vordefinierte Zugkraft einstellbar, bei der der Anschlagteller 38 kraftübertragend zur Anlage gerät, und bei der die Trenneinrichtung 10 die Trennung der Zugstangen 11 und 12 bei Unterschreitung der Mindestzugkraft im Zugmittel 23, 34 voneinander auslöst.

Ferner ist auf dem tellerförmigen Ende 37 der ersten Zugstange 11 eine Sperrhülse 18 aufgenommen. Diese ist rotationssymmetrisch ausgeführt und umfasst einen ersten Bereich 21 mit einem großen Innenradius und einem zweiten Bereich 22 mit einem kleinen Innenradius.

Die zweite Zugstange 12 weist eine Nut 19 auf, in der ein Klemmring 13b eingesetzt ist. Durch die Zugkraft in der zweiten Zugstange 12 gelangt der Klemmring 13b gegen eine Anschlaghülse 29 zum Anschlag, die einteilig mit dem Verschlusselement 15b ausgeführt sein kann oder zumindest an dieser anliegt. Folglich wird die Zugkraft in der Zugstange 12 über die Nut 19 und den Klemmring 13b in die Anschlaghülse 29 eingeleitet und nachfolgend in das Verschlusselement 15b übertragen. Die Zugkraft verläuft folgend über den zweiten Gehäuseteil 14b und den Anschlag auf den Anschlagteller 38 und über das tellerförmige Ende 37 in die erste Zugstange 11, sodass ein geschlossener Kraftfluss zwischen den Zugstangen 11 und 12 entsteht.

In der dargestellten Situation umschließt die Sperrhülse 19 den Klemmring 13b mit dem zweiten Bereich 22 mit kleinem Durchmesser. Wird die Mindestzugkraft in der Zugstange 11 unterschritten, so expandiert die Federanordnung 17 und die Sperrhülse 18 wandert in Richtung zur zweiten Zugstange 12. Dabei umgibt die Sperrhülse 18 den Klemmring 13b mit dem ersten Bereich 21 mit großem Innenradius, so dass der Klemmring 13b aus der Nut 19 gelöst werden kann. Beispielsweise kann der Klemmring 13b derart selbstfedernd ausgeführt sein, dass dieser in der Freigabestellung selbsttätig aus der Nut 19 heraus springt. Im Ergebnis wird die zweite Zugstange 12 freigegeben, und eine Trennung der Zugstangen 11 und 12 durch die Trenneinrichtung 10 kann erfolgen.

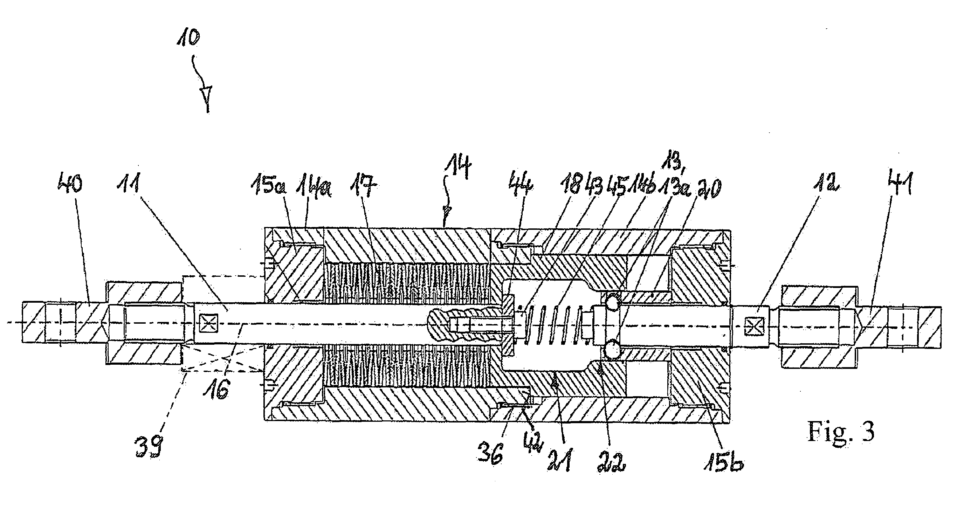

In Figur 3 ist ein weiteres Ausführungsbeispiel der Trenneinrichtung 10 in einem Querschnitt gezeigt. An den Zugstangen 11 und 12 sind Verbindungselemente 40 und 41 angeordnet, mit denen die Zugstangen 11 und 12 beispielsweise mit den Enden eines Zugseils verbunden werden können. Gemäß der Darstellung liegt wiederum eine Mindestzugkraft in den Zugstangen 11 und 12 entlang der Längsachse 16 an der Trenneinrichtung 10 an. Dabei befindet sich die Sperrhülse 18 an der Anschlagkante 42, die durch den Endbereich des ersten Gehäuseteils 14a gebildet ist. Die Sperrhülse 18 ist innerhalb des zweiten Gehäuseteils 14b geführt, wobei beide Gehäuseteile 14a und 14b zur Bildung des Gehäuses 14 der Trenneinrichtung 10 über eine Schraubverbindung 36 miteinander verschraubt sind.

Im Bereich des inneren Endes der ersten Zugstange 11 ist endseitig ein Schraubenelement 43 eingeschraubt, das einen Teller 44 mit der ersten Zugstange 11 verbindet. Zwischen dem Teller 44 und den Tellerfederelementen der Federanordnung 17 ist die Sperrhülse 18 über einen nach Innen weisenden Kragenbereich mit der ersten Zugstange 11 verbunden. Die Sperrhülse 18 umfasst wiederum einen ersten Bereich 21 mit einem großen Innenradius und einem zweiten Bereich 22 mit einem kleinen Innenradius.

Gemäß der Darstellung ist der Sperrkörper 13 als Kugelelement 13a ausgeführt, wobei mehrere Kugelelemente 13a auf dem Umfang der zweiten Zugstange 12 gleich verteilt in der Nut 19 angeordnet sind. Die Kugelelemente 13a sind in einer Kugelhülse 20 aufgenommen, die eine entsprechende Anzahl von Bohrungen zur Aufnahme der Kugelelemente 13a besitzt. Die Kugelhülse 20 stößt innenseitig an das Verschlusselement 15b an, so dass eine Zugkraft in der zweiten Zugstange 12 über die Kugelelemente 13a auf die Kugelhülse 20 übertragen werden kann, die sich am Verschlusselement 15b und damit am Gehäuse 14 abstützt. Die Kugelelemente 13a können nicht aus der Nut 19 und aus den Bohrungen der Kugelhülse 20 gelangen, da die Sperrhülse 18 die Kugelelemente 13a in der dargestellten Sperrstellung über den zweiten Bereich 22 mit dem kleinen inneren Radius in der gezeigten Anordnung festhält. Diese Sperrwirkung wird dadurch erreicht, dass die Kugelhülse 20 die Kugelelemente 13a radial zur Längsachse in die Nut drückt, und so ein Formschluss gebildet wird.

Wird die Mindestzugkraft unterschritten, expandiert die Federanordnung 17 und die Sperrhülse 18 wird in Richtung zur zweiten Zugstange 12 hin bewegt. Dabei wandert der zweite Bereich 22 mit dem kleinen Innenradius entlang der Kugelhülse 20 in Richtung zum Verschlusselement 15b. Folglich gerät der erste Bereich 21 mit dem großen Innenradius der Sperrhülse 18 in Überdeckung mit den Kugelelementen 13a, so dass diese zur Freigabe aus der Kugelhülse 20 heraus gelangen können. Im Ergebnis wird die zweite Zugstange 12 freigegeben, auch wenn die Mindestzugkraft in den Zugstangen 12 und 13 nur kurzzeitig unterschritten wird. Um ein tatsächliches Herausführen der zweiten Zugstange 12 aus dem Gehäuse sicherzustellen, ist eine Hilfsfeder 45 vorgesehen, die auf die zweite Zugstange 12 wirkt. Die Kraftbeaufschlagung wirkt dabei derart, dass die zweite Zugstange 12 durch die Hilfsfeder 45 aus dem Gehäuse 14 herausgedrückt wird, wenn diese aus der sperrenden Anordnung der Sperrkörper 13 freigegeben wird.

Um die Trenneinrichtung 10 beispielsweise in das Seil 23 einer Nachspanneinrichtung 30 zu integrieren, muss diese vorher in die Sperrstellung gebracht werden. Hierzu ist eine Montagehilfe 39 erforderlich, die die erste Zugstange 11 in der gezeigten Sperrstellung fixiert. Die Montagehilfe 39 kann C-förmig ausgeführt sein und zwischen der Schulter, gebildet durch das Verbindungselement 40 auf der ersten Zugstange 11, und der Außenseite des Verschlusselementes 15a klemmend eingesetzt wird. Wird die Zugstange 11 unter Kompression der Federanordnung 17 aus dem Gehäuse 14 der Trenneinrichtung 10 herausgezogen, kann die Montagehilfe 39 in diesem herausgezogenen Zustand zwischen dem Verbindungselement 40 und dem Verschlusselement 15a eingesetzt werden. Wird die Zugkraft anschließend über das Seil 23 auf die Zugstangen 11 und 12 aufgebracht, kann die Montagehilfe 39 entnommen werden und die Zugkraft im Seil 23 sorgt bei Erreichen der Mindestzugkraft dafür, dass die Sperrposition nicht mehr verlassen wird.

Die Erfindung beschränkt sich in ihrer Ausführung nicht auf das vorstehend angegebene bevorzugte Ausführungsbeispiel.

### Bezugszeichenliste

- 10: Trenneinrichtung
- 11: erstes Anschlusselement, erste Zugstange
- 12: zweites Anschlusselement, zweite Zugstange
- 13: Sperrkörper, Kugelelement
- 13a: Sperrkörper, Kugelelement
- 13b: Sperrkörper, Klemmring
- 14: Gehäuse
- 14a: erster Gehäuseteil
- 14b: zweiter Gehäuseteil
- 15a: Verschlusselement
- 15b: Verschlusselement
- 16: Längsachse
- 17: Federanordnung
- 18: Sperrhülse
- 19: Nut
- 20: Kugelhülse
- 21: erster Bereich mit großem Innenradius
- 22: zweiter Bereich mit kleinem Innenradius
- 23: Zugmittel, Seil
- 24: Spannrad
- 25a: Verbindungselement
- 25b: Verbindungselement
- 26: Mast
- 27: Sperrklinke
- 28: Zahnkranz
- 29: Anschlaghülse
- 30: Nachspanneinrichtung
- 31: Isolator
- 32: Rolle
- 33: Rolle
- 34: Zugmittel, Seil
- 35: Wippe
- 36: Schraubverbindung
- 37: tellerförmiges Ende
- 38: Anschlagteller
- 39: Montagehilfe
- 40: Verbindungselement
- 41: Verbindungselement
- 42: Anschlagkante
- 43: Schraubenelement
- 44: Teller
- 45: Hilfsfeder

## Patentansprüche

1. Trenneinrichtung (10) für eine Unterbrechung einer Zugkraft in einem Zugmittel (23, 34) mit
einem ersten Anschlusselement (11) und einem zweiten Anschlusselement (12), wobei die Trenneinrichtung (10) über die Anschlusselemente (11, 12) in den Kraftfluss des Zugmittels (23, 34) integrierbar ist, und zwischen dem ersten Anschlusselement (11) und dem zweiten Anschlusselement (12) Mittel (13, 13a, 13b) vorgesehen sind, die derart ausgebildet sind, dass die Anschlusselemente (11, 12) bei Unterschreiten einer Mindestzugkraft im Zugmittel (23, 34) mechanisch voneinander getrennt werden, wobei die Trenneinrichtung (10) ein Gehäuse (14) aufweist,
**dadurch gekennzeichnet,**
**dass** die Mittel (13, 13a, 13b) als wenigstens ein Sperrkörper (13) ausgebildet sind, der im Kraftfluss zwischen den Anschlusselementen (11, 12) angeordnet Ist, und
**dass** die Anschlusselemente (11, 12) als Zugstangen (11, 12) ausgeführt und abschnittweise in das Gehäuse (14) hineingeführt sind, und
**dass** die zweite Zugstange (12) eine umlaufende Nut (19) zur formschlüssigen Aufnahme des oder der Sperrkörper (13) in der Sperrstellung aufweist.

2. Trenneinrichtung (10) nach Anspruch 1, **dadurch gekennzeichnet, dass** der wenigstens eine Sperrkörper (13) als Kugelelement (13a) oder als Klemmring (13b) ausgebildet ist.

3. Trenneinrichtung (10) nach Anspruch 1, **dadurch gekennzeichnet, dass** das Gehäuse (14) zylinderförmig ausgeführt ist und endseitige Verschlusselemente (15a, 15b) aufweist, wobei die Zugstangen (11, 12) durch Öffnungen in den Verschlusselementen (15a, 15b) in das Gehäuse (14) hineingeführt sind und sich entlang einer gemeinsamen Längsachse (16) erstrecken.

4. Trenneinrichtung (10) nach Anspruch 3, **dadurch gekennzeichnet, dass** im Gehäuse (14) eine Federanordnung (17) aufgenommen ist, wobei der sich in das Gehäuse (14) hinein erstreckende Teil der ersten Zugstange (11) mit der Federanordnung (17) derart wirkverbunden ist, dass die erste Zugstange (11) unter gleichzeitiger Speicherung potentieller Energie in der Federanordnung (17) aus dem Gehäuse (14) herausziehbar ist.

5. Trenneinrichtung (10) nach Anspruch 4, **dadurch gekennzeichnet, dass** zur Bildung der Mindestzugkraft im Zugmittel (23, 34) die erste Zugstange (11) durch das Zugmittel (23, 34) um einen Kompressionsweg unter Komprimierung der Federanordnung (17) aus dem Gehäuse (14) in eine Sperrstellung herausziehbar ist.

6. Trenneinrichtung (10) nach Anspruch 5, **dadurch gekennzeichnet, dass** eine Sperrhülse (18) vorgesehen ist, in die sich die zweite Zugstange (12) hinein erstreckt, wobei die Sperrhülse (18) mit der Bewegung der ersten Zugstange (11) mitbewegbar angeordnet ist und wobei der wenigstens eine Sperrkörper (13) in der Sperrstellung der ersten Zugstange (11) zwischen der Sperrhülse (18) und der zweiten Zugstange (12) formschlüssig und/oder kraftübertragend angeordnet ist.

7. Trenneinrichtung (10) nach Anspruch 4 bis 6, **dadurch gekennzeichnet, dass** die erste Zugstange (11) bei Unterschreiten der Mindestzugkraft durch Entspannung der Federanordnung (17) in eine Freigabestellung bewegbar ist, in der der zumindest eine Sperrkörper (13) die zweite Zugstange (12) freigibt, sodass diese in Richtung der Längsachse (16) aus dem Gehäuse (14) herausziehbar ist.

8. Trenneinrichtung (10) nach einem der Ansprüche 5 bis 7, **dadurch gekennzeichnet, dass** eine Kugelhülse (20) vorgesehen ist, durch die sich die zweite Zugstange (12) hindurch erstreckt und die die Kugelelemente (13) umschließt, wobei die Kugelhülse (20) in der Sperrstellung umfangsseitig von der Sperrhülse (18) umschlossen ist.

9. Trenneinrichtung (10) nach Anspruch 1 oder 8, **dadurch gekennzeichnet, dass** die Sperrhülse (18) einen ersten Bereich (21) mit einem großen Innenradius und einen zweiten Bereich (22) mit einem kleinen Innenradius aufweist, wobei die Sperrhülse (18) in der Sperrstellung die Sperrkörper (13) über den zweiten Bereich (22) in der Kugelhülse (20) hält und in der Freigabestellung die Sperrkörper (13) über den ersten Bereich (21) aus der Kugelhülse (20) freigibt, sodass die Sperrkörper (13) aus der Nut (19) heraus gelangen und die zweite Zugstange (12) aus dem Gehäuse (14) freigegeben ist.

10. Trenneinrichtung (10) nach einem der vorgenannten Ansprüche, **dadurch gekennzeichnet, dass** das Zugmittel (23, 34) als Seil (23, 34) zum Spannen eines Tragseils und/oder zum Spannen eines Fahrdrahtes eines Kettenwerkes für ein Schienenfahrzeug ausgebildet ist.

11. Trenneinrichtung (10) nach einem der vorgenannten Ansprüche, **dadurch gekennzeichnet, dass** die Trenneinrichtung (10) elektrisch leitend ausgebildet ist, sodass elektrischer Strom durch das Seil (23, 34) über die Anschlusselemente (11, 12) fließen kann.

12. Trenneinrichtung (10) nach einem der Ansprüche 1 bis 10, **dadurch gekennzeichnet, dass** die Trenneinrichtung (10) elektrisch isolierend ausgebildet ist, sodass die Trenneinrichtung (10) die Funktion eines Isolators in einem Kettenwerk und/oder in einer Nachspanneinrichtung für ein Kettenwerk erfüllt.

## Claims

1. A separating device (10) for interrupting a traction force in a traction mechanism (23, 34), comprising
a first connection element (11) and a second connection element (12), wherein the separating device (10) can be integrated via the connection elements (11, 12) in the force flow of the traction mechanism (23, 34), and elements (13, 13a, 13b) are provided between the first connection element (11) and the second connection element (12), which elements are formed in such a manner that the connection elements (11, 12) are mechanically separated from each other when the traction force falls below a minimum traction force in the traction mechanism (23, 34), wherein the separating device (10) has a housing (14),
**characterized in that**
the elements (13, 13a, 13b) are formed as at least one locking body (13) that is arranged in the force flow between the connection elements (11, 12) and
that the connection elements (11, 12) are configured as tie rods (11, 12) and are inserted in certain sections into the housing (14), and
that the second tie rod (12) has a circumferential groove (19) for form-fitting receiving the locking body or locking bodies (13) in the locking position.

2. The separating device (10) according to claim 1,
**characterized in that**
the at least one locking body (13) is formed as a ball element (13a) or as a clamping ring (13b).

3. The separating device (10) according to claim 1,
**characterized in that**
the housing (14) is cylindrical and has cover elements (15a, 15b) at the end sides, wherein the tie rods (11, 12) are inserted into the housing (14) through openings in the cover elements (15a, 15b) and extend along a common longitudinal axis (16).

4. The separating device (10) according to claim 3,
**characterized in that**
a spring arrangement (17) is received in the housing (14), wherein that portion of tie rod (11) that extends into the housing (14) is operatively connected to the spring arrangement (17) in such a manner that the first tie rod (11) can be pulled out of the housing (14) while storing potential energy in the spring arrangement (17) at the same time.

5. The separating device (10) according to claim 4,
**characterized in that**
for forming the minimum traction force in the traction mechanism (23, 34), the first tie rod (11) can be pulled by the traction mechanism (23, 34) by a compression stroke out of the housing (14) into a locking position, thereby compressing the spring arrangement (17).

6. The separating device (10) according to claim 5,
**characterized in that**
a locking sleeve (18) is provided into which the second tie rod (12) extends, wherein the locking sleeve (18) is arranged so as to move together with the movement of the first tie rod (11), and wherein in the locking position of the first tie rod (11), the at least one locking body (13) is arranged between the locking sleeve (18) and the second tie rod (12) in a form-fitting and/or force-transmitting manner.

7. The separating device (10) according to the claims 4 to 6,
**characterized in that**
upon falling below the minimum traction force, the first tie rod (11) can be moved by relaxation of the spring arrangement (17) into a releasing position in which the at least one locking body (13) releases the second tie rod (12) so that the second tie rod can be pulled out of the housing (14) in the direction of the longitudinal axis (16).

8. The separating device (10) according to any one of the claims 5 to 7,
**characterized in that**
a ball sleeve (20) is provided through which the second tie rod (12) extends and which encloses the ball elements (13), wherein in the locking position, the ball sleeve (20) is enclosed on the circumference by the locking sleeve (18).

9. The separating device (10) according to claim 1 or claim 8,
**characterized in that**
the locking sleeve (18) has a first region (21) with a large inner radius and a second region (22) with a small inner radius, wherein in the locking position, the locking sleeve (18) retains the locking bodies (13) via the second region (22) in the ball sleeve (20), and in the releasing position, it releases the locking bodies (13) via the first region (21) from the ball sleeve (20) so that the locking bodies (13) can move out of the groove (19), and the second tie rod (12) is released from the housing (14).

10. The separating device (10) according to any one of the preceding claims,
**characterized in that**
the traction mechanism (23, 34) is implemented as a cable (23, 34) for tensioning a support cable and/or for tensioning a contact wire of a catenary for a rail vehicle.

11. The separating device (10) according to any one of the preceding claims,
**characterized in that**
the separating device (10) is electrically conductive so that electric current can flow through the cable (23, 34) via the connection elements (11, 12).

12. The separating device (10) according to any one of the claims 1 to 10,
**characterized in that**
the separating device (10) is electrically isolating so that the separating device (10) fulfils the function of an isolator in a catenary and/or in a retensioning device for a catenary.

## Revendications

1. Dispositif de dissociation (10) conçu pour interrompre une force de traction dans un moyen de traction (23, 34), comprenant
un premier élément de rattachement (11) et un second élément de rattachement (12), ledit dispositif de dissociation (10) pouvant être intégré dans le flux de force dudit moyen de traction (23, 34) par l'intermédiaire desdits éléments de rattachement (11, 12), sachant que des moyens (13, 13a, 13b), prévus entre ledit premier élément de rattachement (11) et ledit second élément de rattachement (12), sont réalisés de façon telle que lesdits éléments de rattachement (11, 12) soient dissociés mécaniquement l'un de l'autre en cas de dépassement négatif d'une force de traction minimale dans ledit moyen de traction (23, 34), ledit dispositif de dissociation (10) étant muni d'un carter (14),
**caractérisé par le fait**
**que** les moyens (13, 13a, 13b) sont réalisés sous la forme d'au moins un corps de blocage (13) interposé entre les éléments de rattachement (11, 12), dans le flux de force,
**que** lesdits éléments de rattachement (11, 12) sont réalisés sous la forme de tiges de traction (11, 12), et sont engagés dans le carter (14) par tronçons, et
**que** la seconde tige de traction (12) présente une rainure périphérique (19) conçue pour recevoir le ou les corps de blocage (13) dans la position de blocage, par complémentarité de formes.

2. Dispositif de dissociation (10) selon la revendication 1,
**caractérisé par le fait**
**que** le corps de blocage (13), à présence minimale, est réalisé sous la forme d'un élément sphérique (13a) ou d'une bague de coincement (13b).

3. Dispositif de dissociation (10) selon la revendication 1,
**caractérisé par le fait**
**que** le carter (14) offre une réalisation cylindrique et comporte des éléments extrêmes d'obturation (15a, 15b), les tiges de traction (11, 12) étant engagées dans ledit carter (14) en traversant des orifices pratiqués dans lesdits éléments d'obturation (15a, 15b), et s'étendant le long d'un axe longitudinal commun (16).

4. Dispositif de dissociation (10) selon la revendication 3,
**caractérisé par le fait**
**qu'**un ensemble de ressorts (17) est logé dans le carter (14), la partie de la première tige de traction (11), qui pénètre dans ledit carter (14), étant en liaison opérante avec ledit ensemble de ressorts (17) de façon telle que ladite première tige de traction (11) puisse être extraite dudit carter (14) avec accumulation simultanée d'énergie potentielle dans ledit ensemble de ressorts (17).

5. Dispositif de dissociation (10) selon la revendication 4,
**caractérisé par le fait**
**que**, pour développer la force de traction minimale dans le moyen de traction (23, 34), la première tige de traction (11) peut être extraite du carter (14) sous l'action dudit moyen de traction (23, 34), jusqu'à une position de blocage, en parcourant une course de compression ayant pour effet de comprimer l'ensemble de ressorts (17).

6. Dispositif de dissociation (10) selon la revendication 5,
**caractérisé par le fait**
**qu'**il est prévu une douille de blocage (18) dans laquelle la seconde tige de traction (12) pénètre, ladite douille de blocage (18) occupant une position qui autorise une mobilité conjointement au mouvement de la première tige de traction (11), et le corps de blocage (13) à présence minimale étant interposé entre ladite douille de blocage (18) et ladite seconde tige de traction (12), par complémentarité de formes et/ou avec effet de transmission de force, lorsque ladite première tige de traction (11) se trouve dans la position de blocage.

7. Dispositif de dissociation (10) selon les revendications 4 à 6,
**caractérisé par le fait**
**que**, lors d'un dépassement négatif de la force de traction minimale, la première tige de traction (11) peut être mue, par détente de l'ensemble de ressorts (17), jusqu'à une position de libération dans laquelle le corps de blocage (13), à présence minimale, libère la seconde tige de traction (12) de façon telle que cette dernière puisse être extraite du carter (14) dans la direction de l'axe longitudinal (16).

8. Dispositif de dissociation (10) selon l'une des revendications 5 à 7,
**caractérisé par le fait**
**qu'**il est prévu un coussinet sphérique (20) qui est traversé par la seconde tige de traction (12) et ceinture les éléments sphériques (13a), ledit coussinet sphérique (20) étant entouré périphériquement par la douille de blocage (18) dans la position de blocage.

9. Dispositif de dissociation (10) selon la revendication 1 ou 8,
**caractérisé par le fait**
**que** la douille de blocage (18) comprend une première région (21) dotée d'un grand rayon intérieur et une seconde région (22) pourvue d'un petit rayon intérieur, sachant que, dans la position de blocage, ladite douille de blocage (18) maintient les corps de blocage (13) dans le coussinet sphérique (20) par l'intermédiaire de ladite seconde région (22), et que, dans la position de libération, elle permet auxdits corps de blocage (13) de sortir dudit coussinet sphérique (20), par l'intermédiaire de ladite première région (21), de telle sorte que lesdits corps de blocage (13) parviennent hors de la rainure (19), et que ladite seconde tige de traction (12) puisse sortir du carter (14).

10. Dispositif de dissociation (10) selon l'une des revendications précitées,
**caractérisé par le fait**
**que** le moyen de traction (23, 34) est réalisé sous la forme d'un câble (23, 34) conçu pour bander un filin de support et/ou pour tendre un fil de contact d'une caténaire dévolue à un véhicule ferroviaire.

11. Dispositif de dissociation (10) selon l'une des revendications précitées,
**caractérisé par le fait**
**que** ledit dispositif de dissociation (10) offre une réalisation électriquement conductrice, de telle sorte qu'un courant électrique puisse circuler dans le câble (23, 34) par l'intermédiaire des éléments de rattachement (11, 12).

12. Dispositif de dissociation (10) selon l'une des revendications 1 à 10,
**caractérisé par le fait**
**que** ledit dispositif de dissociation (10) offre une réalisation électriquement isolante, de telle sorte que ledit dispositif de dissociation (10) remplisse la fonction d'un isolant dans une caténaire et/ou dans un dispositif de post-serrage affecté à une caténaire.
